# EUROPEAN PATENT SPECIFICATION

(11) **EP 3 381 682 B1**
(45) Date of publication and mention of the grant of the patent: **29.03.2023**
(21) Application number: 16868343.1
(22) Date of filing: 02.11.2016
(51) Int. Cl.: B29C 65/16, B32B 27/00, B32B 7/02, B32B 27/08, B29K 33/04, B29K 77/00, B29K 67/00, B29K 55/02

(54) **JOINING STRUCTURE**
VERBINDUNGSSTRUKTUR
STRUCTURE D'ASSEMBLAGE

(30) Priority: 26.11.2015 JP 2015230442
(43) Date of publication of application: 03.10.2018
(73) Proprietor: Omron Corporation, Kyoto-shi, Kyoto 600-8530 (JP)
(72) Inventor: SATO Daisuke, Kyoto-shi Kyoto 600-8530 (JP); NISHIKAWA Kazuyoshi, Kyoto-shi Kyoto 600-8530 (JP)
(74) Representative: Becker Kurig & Partner Patentanwälte mbB
(86) International application number: PCT/JP2016/082522
(87) International publication number: WO 2017/090394

(56) References cited:
- EP-A1- 1 642 701
- CN-A- 1 760 272
- JP-A- H03 143 632
- JP-A- 2002 284 895
- JP-A- 2002 284 895
- JP-A- 2003 526 547
- JP-A- 2006 312 303
- US-A1- 2008 286 532

## Description

### [Technical Field]

The present invention relates to a joining structure in which different types of resin members are joined, and particularly to a joining structure in which a laser-transmitting resin member and a laser-absorbing resin member are laser-joined.

### [Background Art]

Conventionally, a joining structure in which different types of resin members are joined is known. When this joining structure is formed, the resin members are generally bonded via an adhesive or the like. However, in recent years, in consideration of recyclability, a reduction in man-hour, etc., different types of resin members have been frequently joined by laser bonding using a laser beam.

However, since this joining structure is originally configured to join different members that are difficult to join, sufficient strength is not obtained in the method using the laser bonding when compatibility (laser bondability) of resins is low or when there is no compatibility. Thus, there is a problem that a combination of the resin members constituting the joining structure is naturally limited.

To solve this problem, it is disclosed, for instance, in Patent Literature 1 that at least one of a first resin molding formed of a first thermoplastic resin and a second resin molding formed of a second thermoplastic resin is made to contain a compatibilizing agent for the first and second thermoplastic resins, and the first resin molding and the second resin molding are joined by laser irradiation. According to the disclosure of Patent Literature 1, since the thermoplastic resin composition of which at least one of the joined resin moldings is formed is made to contain the compatibilizing agent, the disclosure is configured to enable application to a wide combination of resins and to enable a great improvement in bonding strength.
US 2008/286532 A1 relates to a molded resin product obtained by joining together a transmitting material mainly comprising a thermoplastic polyester and an absorbing material mainly comprising polyphenylene sulfide, by laser welding.
JP 2002 284 895 A and likewise EP 1642 701 disclose a resin molded article comprising a transmitting resin material transmitting a laser light as a heat source and an absorbing resin material absorbing the laser light, where the abutting end parts of the transmitting resin material and the absorbing material are bonded by welding by laser light irradiation from the transmitting resin material side, the absorbing resin material is composed of an alloy material comprising a first resin material constituting the transmitting resin material and a second resin material less compatible with the first resin material.

### [Reference List]

### [Patent Literature]

[Patent Literature 1]
Japanese Patent Application Laid-Open (JP-A) No. 2006-312303

### [Summary of Invention]

### [Technical Problem]

According to the disclosure of Patent Literature 1, since the first and second thermoplastic resins are made to contain the compatibilizing agent having compatibility, even when a component that is not compatible with the first thermoplastic resin is contained in the second resin molding, the first resin molding and the second resin molding can be joined by laser irradiation.

However, simply including the compatibilizing agent and performing the laser irradiation are merely depending on the compatibility of the first and second thermoplastic resins with the compatibilizing agent, in other words, a characteristic of the compatibilizing agent. Considering that the compatibility also varies, there is a problem that there is a lack of reliability in terms of the improvement of the bonding strength.
To obtain sufficient bonding strength in the disclosure of Patent Literature 1, the compatibilizing agent is limited to some extent. As a result, since the combination of the resins is naturally limited, it is hard to say that the disclosure can be applied to a wide range of combinations of resins.
The present invention was made in view of such circumstances, and an object thereof is to provide a technique in which, in a joining structure composed of a laser-transmitting resin member and a laser-absorbing resin member, even when a resin component that is not compatible with the laser-transmitting resin member is included in the laser-absorbing resin member, the resin members are firmly joined.

### [Solution to Problem]

To achieve the above object, a joining structure according to the present invention is configured to not only include a resin component that is compatible with a laser-transmitting resin member in a laser-absorbing resin member, but also to increase an abundance ratio of the resin component in a joining portion.
To be specific, the present invention is provided in the appended claims. The flowing disclosure serves a better understanding of the present invention. Accordingly, the disclosure is a joining structure including a laser-transmitting resin member and a laser-absorbing resin member. The laser-absorbing resin member includes a first resin component, which is not compatible with the laser-transmitting resin member, and a second resin component, which is compatible with the laser-transmitting resin member. An abundance ratio of the second resin component in a melted/solidified part that constitutes the joining portion of the laser-transmitting resin member and the laser-absorbing resin member is higher than that of the second resin component in the laser-absorbing resin member.

In the present invention, "laser-transmitting resin member" refers to a resin member that transmits an irradiated laser beam, and "laser-absorbing resin member" refers to a resin member that absorbs the irradiated laser beam to generate heat.

In the present invention, "compatibility" refers to laser bondability. "Being compatible or having compatibility with" means that, for example, when a laser beam is radiated to the laser-transmitting resin member and the laser-absorbing resin member, which are brought into close contact with each other, from the side of the laser-transmitting resin member, the laser-absorbing resin member absorbing the transmitted laser beam generates heat, and thereby the laser-transmitting resin member and the laser-absorbing resin member can be joined (welded).

According to the configuration, since the second resin component, which has the compatibility (the laser bondability) with the laser-transmitting resin member, is included in the laser-absorbing resin member, even when the resin component, which does not have the compatibility with the laser-transmitting resin member, is included in the laser-absorbing resin member, the laser-transmitting resin member and the laser-absorbing resin member can be joined.

However, since the second resin component of the resin components included in the laser-absorbing resin member is present in the joining portion of the laser-transmitting resin member and the laser-absorbing resin member at a relatively large amount, the laser-transmitting resin member and the laser-absorbing resin member can be firmly joined. In addition, since the second resin component is present in the joining portion at a large amount, even when the compatibility between the laser-transmitting resin member and the second resin component is not relatively high, bonding strength between the laser-transmitting resin member and the laser-absorbing resin member can be reliably improved.

In this way, in the present invention, without depending on only characteristics of the second resin component that is compatible with the laser-transmitting resin member, since the abundance ratio of the second resin component in the joining portion is increased to enhance the bonding strength, choice of the second resin component becomes wider, and the second resin component can be applied to a wide combination in association with this.

Here, making the abundance ratio of the second resin component in the joining portion higher than that of the second resin component in the laser-absorbing resin member can be easily realized because the second resin component easily oozes out to a junction interface of the laser-absorbing resin member, for instance, by adjusting output of the laser beam or selecting a resin component having smaller molecular weight (higher fluidity) than the first resin component as the second resin component. However, when the abundance ratio of the second resin component in the laser-absorbing resin member is excessively low, an amount of ooze of the second resin component is reduced, and thus it may be difficult to improve the bonding strength between the laser-transmitting resin member and the laser-absorbing resin member.

Therefore, in the joining structure, the abundance ratio of the second resin component in the laser-absorbing resin member is preferably more than or equal to 5 wt%.

The idea that the resin component that is compatible with the laser-transmitting resin member is made to be present in the joining portion of the laser-transmitting resin member and the laser-absorbing resin member at a relatively large amount and thereby the bonding strength is improved can also be applied to a case in which the laser-absorbing resin member is a polymer alloy having a sea-island structure (a matrix domain structure).

To be specific, the present invention is a joining structure including a laser-transmitting resin member and a laser-absorbing resin member. The laser-absorbing resin member is a polymer alloy that has a sea-island structure in which a first resin component, which is not compatible with the laser-transmitting resin member, is used as a sea component and a third resin component, which is compatible with the laser-transmitting resin member is used as an island component, and the polymer alloy includes a dispersion material that is compatible with the first resin component. An abundance ratio of the dispersion material in a melted/solidified part that constitutes the joining portion of the laser-transmitting resin member and the laser-absorbing resin member is higher than that of the dispersion material in the laser-absorbing resin member.

According to this configuration, since the polymer alloy having the sea-island structure in which the first resin component is used as the sea component and the third resin component is used as an island component is used as the laser-absorbing resin member, a joining structure having advantages of the first resin component and the third resin component (supplementing disadvantages of the first resin component and the third resin component) can be realized.

However, the dispersion material having smaller molecular weight and easier movement than the first and third resin components actively oozes out to the junction interface of the laser-absorbing resin member during joining (melting). Thereby, the abundance ratio of the dispersion material in the joining portion is increased, and thus laser-transmitting resin member and the laser-absorbing resin member can be more firmly joined.

When the second resin component is also compatible with the first resin component, the second resin component can be used as the dispersion material. That is, the configuration (the latter invention) using the polymer alloy having the sea-island structure as the laser-absorbing resin member can be said to be an aspect of the case in which, in the configuration (the former invention) using a resin member including the first and second resin components as the laser-absorbing resin member, the second resin component is also compatible with the first resin component and the laser-absorbing resin member includes the third resin component.

Thus, in this joining structure, for the same reason as the former invention, the abundance ratio of the dispersion material in the laser-absorbing resin member is preferably more than or equal to 5 wt%.

### [Advantageous Effects of Invention]

As described above, according to the joining structure of the present invention, even when a resin component that is not compatible with a laser-transmitting resin member is included in a laser-absorbing resin member, the laser-transmitting resin member and the laser-absorbing resin member can be firmly joined.

### [Brief Description of Drawings]

Fig. 1 is a partially enlarged sectional view schematically illustrating a joining portion and its periphery in a joining structure according to a first embodiment of the present invention.
Fig. 2 is a partially enlarged sectional view schematically illustrating a joining portion and its periphery in a joining structure according to a second embodiment of the present invention.
Fig. 3 is a view schematically illustrating a sample making method used in an experimental example.

### [Description of Embodiments]

Hereinafter, embodiments for carrying out the present invention will be described on the basis of the drawings.

### <First embodiment>

### Overall configuration of joining structure

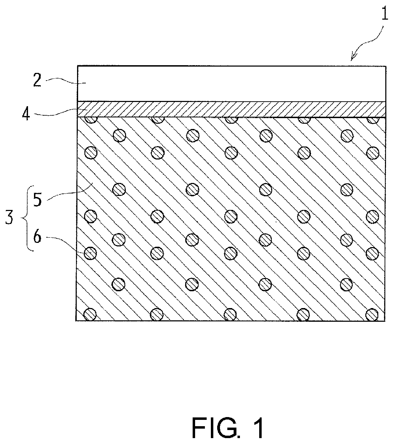

Fig. 1 is a partially enlarged sectional view schematically illustrating a joining portion 4 and its periphery in a joining structure 1 according to the present embodiment. Fig. 1 is a sectional view, but hatching of a laser-transmitting resin member 2 is omitted so that the figure is easier to view. In Fig. 1, a size of each second resin component 6 is exaggeratively illustrated, but a real size of each second resin component 6 is on the level of several microns.

As illustrated in Fig. 1, this joining structure 1 is made up of a laser-transmitting resin member 2 formed of a thermoplastic resin and a laser-absorbing resin member 3 formed of a thermoplastic resin as well. In greater detail, the joining structure 1 is a structure in which, after the laser-transmitting resin member 2 and the laser-absorbing resin member 3 are installed to face each other and are pressurized to be brought into surface contact with each other, a laser beam is radiated from the laser-transmitting resin member 2 side, thereby melting and solidifying surface portions brought into surface contact with each other to join the two resin members 2 and 3.

The laser-absorbing resin member 3 includes a first resin component 5 that is not compatible with the thermoplastic resin of which the laser-transmitting resin member 2 is formed, and second resin components 6 that are compatible with the thermoplastic resin of which the laser-transmitting resin member 2 is formed. In this way, even though the first resin component 5 that is not compatible with the laser-transmitting resin member 2 is included in the laser-absorbing resin member 3, the laser-transmitting resin member 2 and the laser-absorbing resin member 3 are firmly joined, which is one of the features of the joining structure 1 of the present embodiment.

In the present embodiment, "compatibility" refers to laser bondability. "Being compatible or having compatibility with" means that, for example when a laser beam is radiated to the laser-transmitting resin member 2 and the laser-absorbing resin member 3, which are brought into surface contact with each other, from the laser-transmitting resin member 2 side, the laser-absorbing resin member 3 absorbing the transmitted laser beam generates heat, and thereby the laser-transmitting resin member 2 and the laser-absorbing resin member 3 can be joined.

### - Laser-transmitting resin member and laser-absorbing resin member -

Examples of the thermoplastic resin of which the laser-transmitting resin member 2 is formed and a thermoplastic resin of which the first resin component 5 in the laser-absorbing resin member 3 is formed include polyvinyl chloride (PVC), polystyrene (PS), acrylonitrile styrene (AS), acrylonitrile butadiene styrene (ABS), polymethyl methacrylate (PMMA), polyethylene (PE), polypropylene (PP), polycarbonate (PC), modified polyphenylene ether (m-PPE), polyamide 6 (PA6), polyamide 66 (PA66), polyacetal (POM), polyethylene terephthalate (PET), polybutylene terephthalate (PBT), polysulfone (PSF), polyarylate (PAR), polyether imide (PEI), polyphenylene sulfide (PPS), polyether sulfone (PES), polyether ether ketone (PEEK), polyamide imide (PAI), a liquid crystal polymer (LCP), polyvinylidene chloride (PVDC), polytetrafluoroethylene (PTFE), polychlorotrifluoroethylene (PCTFE), and polyvinylidene fluoride (PVDF). The laser-transmitting resin member 2 and the first resin component 5 may be a thermoplastic elastomer (TPE). Examples of the TPE include TPO (olefin series), TPS (styrene series), TPEE (ester series), TPU (urethane series), TPA (nylon series), and TPVC (vinyl chloride series).

A filler may be added to the thermoplastic resin and the thermoplastic elastomer. Examples of the filler include an inorganic filler (a glass fiber, inorganic salt, etc.), a metallic filler, an organic filler, a carbon fiber, and the like.

Thus, since the laser-transmitting resin member 2 is required to transmit the laser beam, natural materials of the thermoplastic resin and the thermoplastic elastomer are preferably used. When the laser-transmitting resin member 2 is colored, a dye that transmits the laser beam is preferably used rather than a pigment that absorbs and scatters the laser beam.

Meanwhile, since the laser-absorbing resin member 3 is required to absorb the laser beam to generate heat, a resin component in which a laser absorption pigment called, for instance, carbon black is added to the thermoplastic resin and the thermoplastic elastomer is preferably used as the first resin component 5 in the laser-absorbing resin member 3.

As the second resin components 6 in the laser-absorbing resin member 3, for example a modified polymer, a block polymer, a graft polymer, etc., each of which has a polar group at a molecular terminal or in a side chain are preferred. Examples of the second resin components 6 include modified materials such as maleic anhydride, glycidyl methacrylate, oxazoline (modified epoxy), and modified imide, which use polypropylene (PP), polyethylene (PE), styrene ethylene propylene styrene copolymer (SEBS), polystyrene (PS), acrylonitrile styrene (AS), or acrylonitrile butadiene styrene copolymer (ABS) as a stem polymer.

Here, since combinations of the first resin component 5 that is not compatible with the thermoplastic resin of which the laser-transmitting resin member 2 exemplified above is formed and the second resin components 6 that are compatible with the same are various, specific examples are not enumerated in full. Here, only two specific examples are shown. For example, when the thermoplastic resin of which the laser-transmitting resin member 2 is formed is PMMA, polyamide (PA) may be used as the first resin component 5, and maleic anhydride of ABS (hereinafter referred to as acid-modified ABS) may be used as the second resin components 6. In a case in which the thermoplastic resin of which the laser-transmitting resin member 2 is formed is PMMA, even when PBT is used as the first resin component 5, the acid-modified ABS may be used as the second resin components 6. The acid-modified ABS is compatible with not only PMMA of which the laser-transmitting resin member 2 is formed but also PA or PBT that is the first resin component 5.

### - Joining portion -

As described above, the joining structure 1 of the present embodiment is formed by installing the laser-transmitting resin member 2 and the laser-absorbing resin member 3 to face each other, pressurizing the resin members to bring them into surface contact with each other, and then radiating the laser beam to the resin members from the laser-transmitting resin member 2 side. In this laser irradiation, heat control is performed such that temperatures of a junction interface and its periphery of the laser-absorbing resin member 3 that absorbs the laser beam to generate heat are higher than or equal to a temperature at which the first resin component 5 and the second resin components 6 are melted together and remain flowable, and a temperature that is lower than or equal to a resin decomposition temperature. Therefore, the joining portion 4 between the laser-transmitting resin member 2 and the laser-absorbing resin member 3 in the joining structure 1 is formed of a melted/solidified part at which junction interfaces and their peripheries of the laser-transmitting resin member 2 and the laser-absorbing resin member 3 are melted, and the melted laser-transmitting resin member 2 and the melted laser-absorbing resin member 3 are solidified in a mixed state.

Thus, in the joining structure 1 of the present embodiment, the laser-transmitting resin member 2 and the laser-absorbing resin member 3 are not simply mixed in the joining portion 4, and an abundance ratio of the second resin components 6 in the joining portion 4 is higher than that of the second resin components 6 in the laser-absorbing resin member 3 (a bulk). To be specific, the joining structure 1 is configured such that the abundance ratio of the second resin components 6 in the joining portion 4 is more than or equal to 30 wt%. In this way, the second resin components 6 that are compatible with the laser-transmitting resin member 2 are adapted to be included in the joining portion 4 at a relatively large amount. Thereby, a diffusion phenomenon of the second resin components 6 occurs, and the laser-transmitting resin member 2 and the laser-absorbing resin member 3 can be firmly joined even though the first resin component 5 that is not compatible with the laser-transmitting resin member 2 is included in the laser-absorbing resin member 3.

Making the abundance ratio of the second resin components 6 in the joining portion 4 higher than that of the second resin components 6 in the laser-absorbing resin member 3 (the bulk) can be easily realized, for instance, by adjusting output of the laser beam or selecting resin components having smaller molecular weights than the first resin component 5 as the second resin components 6. That is, if the resin components having smaller molecular weights than the first resin component 5 are selected as the second resin components 6, when the junction interface and its periphery of the laser-absorbing resin member 3 is melted by suitable laser irradiation, the second resin components 6 that have small molecular weights and easy movement (high fluidity) seep out to the junction interface of the laser-absorbing resin member 3, and are abundantly collected on the joining portion 4, and thus the abundance ratio of the second resin components 6 in the joining portion 4 can be easily increased.

The seepage of the second resin components 6 occurs only at the junction interface and its periphery that generate heat by absorbing the laser beam, and movement of the second resin components 6 does not occur at parts other than these in the laser-absorbing resin member 3. Thereby, the joining structure 1 made up of the laser-transmitting resin member 2 and the laser-absorbing resin member 3 can be formed without changing characteristics of the laser-absorbing resin member 3 side.

When the abundance ratio of the second resin components 6 in the laser-absorbing resin member 3 is excessively low, although the second resin components 6 can be collected on the joining portion 4, an amount of seepage of the second resin components 6 is reduced. Thus, it may be difficult to improve the bonding strength between the laser-transmitting resin member 2 and the laser-absorbing resin member 3. For this reason, the abundance ratio of the second resin components 6 in the laser-absorbing resin member 3 is preferably more than or equal to 5 wt%, and more preferably 20 wt%.

### (Second embodiment)

The present embodiment is different from the first embodiment in which a laser-absorbing resin member 13 is a polymer alloy having a sea-island structure. Hereinafter, differences from the first embodiment will be mainly described.

### - Overall configuration of joining structure -

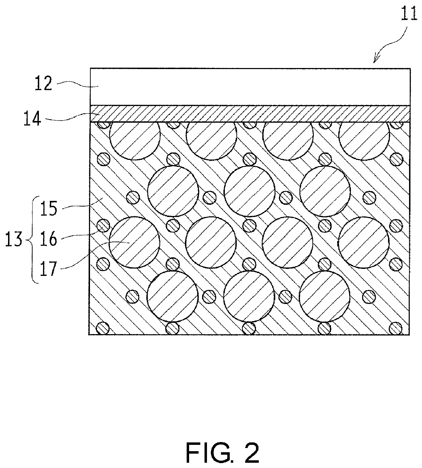

Fig. 2 is a partially enlarged sectional view schematically illustrating a joining portion 14 and its periphery in a joining structure 11 according to the present embodiment. Fig. 2 is a sectional view, but hatching of a laser-transmitting resin member 12 is omitted so that the figure can be easily viewed. In Fig. 2, a size of each third resin component 17 that is an island component is exaggeratively illustrated, but a real size of each third resin component 17 is on the level of several microns.

As illustrated in Fig. 2, this joining structure 11 is made up of a laser-transmitting resin member 12 formed of a thermoplastic resin and a laser-absorbing resin member 13 that is also formed of a thermoplastic resin. The laser-absorbing resin member 13 is formed as a polymer alloy having a sea-island structure (a matrix domain structure) in which a first resin component 15 that is not compatible with the thermoplastic resin of which the laser-transmitting resin member 12 is formed is used as a sea component, and third resin components 17 that are compatible with the thermoplastic resin of which the laser-transmitting resin member 12 is formed are used as island components. In the joining structure 11, a ratio between the first resin component 15 that is the sea component and the third resin components 17 that are the island components is, for instance, 3:7. Dispersion materials 16 are included in the laser-absorbing resin member 13 to produce a state in which the first resin component 15 and the third resin components 17 are mixed to form the sea-island structure.

### - Laser-transmitting resin member, laser-absorbing resin member, and dispersion materials -

The thermoplastic resin and a thermoplastic elastomer of which the laser-transmitting resin member 12 and the first and third resin components 15 and 17 are formed are identical to the thermoplastic resin or the thermoplastic elastomer of which the laser-transmitting resin member 2 and the first resin component 5 in the first embodiment are formed. Thus, natural materials of the thermoplastic resin and the thermoplastic elastomer are preferably used for the laser-transmitting resin member 12. On the other hand, resin components in which a laser absorption pigment called, for instance, carbon black is added to the thermoplastic resin and the thermoplastic elastomer are preferably used as the first and third resin components 15 and 17.

The dispersion materials 16 used in the present embodiment include resin components that are compatible with the thermoplastic resin of which the laser-transmitting resin member 12 is formed, and resin components that are compatible with the first resin component 15. As the dispersion materials, for example a modified polymer, a block polymer, a graft polymer, etc., each of which has a polar group at a molecular terminal or in a side chain, are preferred. Examples of the dispersion materials 16 include modified materials such as maleic anhydride, glycidyl methacrylate, oxazoline (modified epoxy), and modified imide, which use polypropylene (PP), polyethylene (PE), styrene ethylene propylene styrene copolymer (SEBS), polystyrene (PS), acrylonitrile styrene (AS), or acrylonitrile butadiene styrene copolymer (ABS) as a stem polymer.

Here, since combinations of the first resin component 15 that is not compatible with the thermoplastic resin of which the laser-transmitting resin member 12 exemplified above is formed, the third resin components 17 that are compatible with the same, and the dispersion materials 16 are various, specific examples are not enumerated in full. Here, only two specific examples are shown. For example, when the thermoplastic resin of which the laser-transmitting resin member 12 is formed is PMMA, polyamide (PA) may be used as the first resin component 15, ABS may be used as the third resin components 17, and maleic anhydride of ABS (hereinafter referred to as acid-modified ABS) may be used as the dispersion materials 16. In a case in which the thermoplastic resin of which the laser-transmitting resin member 12 is formed is PMMA, even when PBT is used as the first resin component 15, the ABS may be used as the third resin components 17, and the acid-modified ABS may be used as the dispersion materials 16.

### - Joining portion -

The joining structure 11 of the present embodiment is formed by installing the laser-transmitting resin member 12 and the laser-absorbing resin member 13 to face each other, pressurizing the resin members to bring them into surface contact with each other, and then radiating a laser beam to the resin members from the laser-transmitting resin member 12 side. In this laser irradiation, heat control is performed to be higher than or equal to a temperature at which the first and third resin components 15 and 17 and the dispersion materials 16 are melted together and remain flowable, and to be lower than or equal to a resin decomposition temperature.

When a junction interface and its periphery of the laser-absorbing resin member 13 are melted by laser irradiation associated with this heat control, the dispersion materials 16 that have smaller molecular weights and easier movement (higher fluidity) than the first resin component 15 that is the sea component seep out to the junction interface of the laser-absorbing resin member 13, and are abundantly collected on a joining portion 14, and thus an abundance ratio of the dispersion materials 16 in the joining portion 14 can be easily increased. To be specific, the joining structure 11 is configured such that the abundance ratio of the dispersion materials 16 in the joining portion 14 is more than or equal to 30 wt%. In this way, the dispersion materials 16 that are compatible with the laser-transmitting resin member 12 are included in the joining portion 14 at a relatively large amount. Thereby, the laser-transmitting resin member 12 and the laser-absorbing resin member 13 can be firmly joined even though the first resin component 5 that is not compatible with the laser-transmitting resin member 12 is included in the laser-absorbing resin member 13.

Here, since the third resin components 17 that are the island components are also compatible with the laser-transmitting resin member 12, it is thought that bonding strength between the laser-transmitting resin member 12 and the laser-absorbing resin member 13 can be increased even if the dispersion materials 16 are not present. However, it has been confirmed from an experiment that the third resin components 17, the molecular weights of which are typically large in comparison with the dispersion materials 16, do not actively move to the junction interface, but remain in a bulk as the island components. Of course, this does not mean that the third resin components 17 do not contribute to the bonding strength. For example, the laser irradiation is performed to a temperature at which the third resin components 17 are movable within a range that is lower than or equal to the resin decomposition temperature, and the bonding strength between the laser-transmitting resin member 12 and the laser-absorbing resin member 13 may be configured to be increased by a synergistic effect of the dispersion materials 16 and the third resin components 17.

The seepage of the dispersion materials 16 occurs only at the junction interface and its periphery of the laser-absorbing resin member 13 that generate heat by absorbing the laser beam, and movement of the dispersion materials 16 does not occur at parts other than these in the laser-absorbing resin member 13. Thereby, the joining structure 11 made up of the laser-transmitting resin member 12 and the laser-absorbing resin member 13 can be formed without changing characteristics of the polymer alloy having the sea-island structure.

When the abundance ratio of the dispersion materials 16 in the laser-absorbing resin member 13 is excessively low, although the dispersion materials 16 can be collected on the joining portion 14, it is difficult to improve the bonding strength between the laser-transmitting resin member 12 and the laser-absorbing resin member 13 13 in some cases. For this reason, the abundance ratio of the dispersion materials 16 in the laser-absorbing resin member 13 is preferably more than or equal to 5 wt%, and more preferably 20 wt%.

### - Experimental examples -

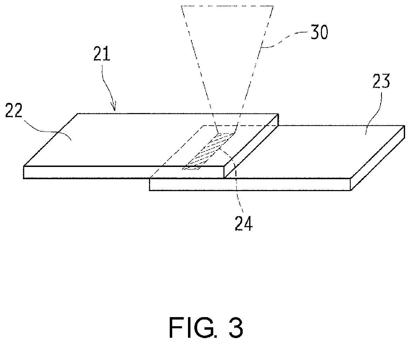

Next, an experimental example performed to confirm bonding strength of the joining structure 1 or 11 according to the present invention will be described with reference to Fig. 3.

In an experimental example, it was examined whether or not bonding strength was improved by causing a resin component that is compatible with a laser-transmitting resin member 22 to be included in a laser-absorbing resin member 23 and by causing an abundance ratio of the resin component in a joining portion 24 between the laser-transmitting resin member 22 and the laser-absorbing resin member 23 to be higher than an abundance ratio in the laser-absorbing resin member 23 (the bulk).

To be specific, ten laser-transmitting resin members 22, each of which was formed of a natural material of polymethyl methacrylate (PMMA) and had a plate shape that was 100 mm long, 17.5 mm wide, and 1 mm thick, were prepared. In addition, five laser-absorbing resin members 23, each of which contained polyamide (PA) to which carbon black was added and had a plate shape that was 100 mm long, 17.5 mm wide, and 2 mm thick, and five laser-absorbing resin members 23, each of which contained polybutylene terephthalate (PBT) to which carbon black was added and had a plate shape that was 100 mm long, 17.5 mm wide, and 2 mm thick, were prepared.

In detail, the laser-absorbing resin members 23 containing PA included one that was formed of PA alone, two that were formed of PA and acid-modified ABS as the second resin component 6, and two that were formed of a polymer alloy having a sea-island structure in which PA was used as a sea component and acrylonitrile butadiene styrene copolymer (ABS) was used as an island component and of acid-modified ABS as the dispersion material 16. For the resin members containing the acid-modified ABS of which the second resin components 6 or the dispersion materials 16 were formed, resin members in which an abundance ratio of the acid-modified ABS was 20 wt% were used.

In detail, the laser-absorbing resin members 23 containing PBT included one that was formed of PBT alone, two that were formed of PBT and acid-modified ABS as the second resin component 6, and two that were formed of a polymer alloy having a sea-island structure in which PBT was used as a sea component and ABS was used as an island component and of acid-modified ABS as the dispersion material 16. For the resin members containing the acid-modified ABS of which the second resin components 6 or the dispersion materials 16 were formed, resin members in which an abundance ratio of the acid-modified ABS was 20 wt% were used.

As illustrated in Fig. 3, after the laser-transmitting resin member 22 and the laser-absorbing resin member 23 were installed to face each other and were pressurized to be brought into surface contact with each other, a laser beam 30 was radiated from the laser-transmitting resin member 22 side under the following first and second laser irradiation conditions, thereby melting and solidifying surface portions brought into surface contact with each other. Ten samples 21, in each of which both the resin members 22 and 23 were joined, were made.

### <First laser irradiation conditions>

Laser: Semiconductor laser (wavelength of 808 nm)
Oscillation mode: Continuous oscillation
Laser output: 5.8 W
Focus diameter: 2 mm
Close-contact pressure: 0.2 MPa

### <Second laser irradiation conditions>

Laser: Semiconductor laser (wavelength of 808 nm)
Oscillation mode: Continuous oscillation
Laser output: 4.0 W
Focus diameter: 2 mm
Close-contact pressure: 0.2 MPa

Details of the ten samples 21 obtained in this way are shown in Table 1.

**Table 1**

| | | Laser-transmitting resin member | Laser-absorbing resin member | | | Laser output (W) | Acid-modified ABS amount (wt%) | | Junction evaluation |
|---|---|---|---|---|---|---|---|---|---|
| | | | | | | | Bulk | Joining portion | |
| Inventive Example | 1 | PMMA | PA | - | Acid-modified ABS | 5.8 | 20 | 30 to 40 | A |
| | 2 | PMMA | PA | ABS | Acid-modified ABS | 5.8 | 20 | 30 to 40 | A |
| | 3 | PMMA | PBT | - | Acid-modified ABS | 5.8 | 20 | 30 to 40 | A |
| | 4 | PMMA | PBT | ABS | Acid-modified ABS | 5.8 | 20 | 30 to 40 | A |
| Comparative Example | 1 | PMMA | PA | - | Acid-modified ABS | 4.0 | 20 | 20 | B |
| | 2 | PMMA | PA | ABS | Acid-modified ABS | 4.0 | 20 | 20 | B |
| | 3 | PMMA | PBT | - | Acid-modified ABS | 4.0 | 20 | 20 | B |
| | 4 | PMMA | PBT | ABS | Acid-modified ABS | 4.0 | 20 | 20 | B |
| | 5 | PMMA | PA | - | - | 5.8 | 0 | 0 | B |
| | 6 | PMMA | PBT | - | - | 5.8 | 0 | 0 | B |

As shown in Table 1, an experimental example using the sample 21 in which the PA as the first resin component 5 and the acid-modified ABS as the second resin component 6 were contained in the laser-absorbing resin member 23 and which was made under the first laser irradiation conditions was used as Inventive Example 1. An experimental example using the sample 21 in which the PBT as the first resin component 5 and the acid-modified ABS as the second resin component 6 were contained in the laser-absorbing resin member 23 and which was made under the first laser irradiation conditions was used as Inventive Example 3. Inventive Examples 1 and 3 correspond to the joining structure 1 of the first embodiment.

In addition, an experimental example using the sample 21 in which the PA as the first resin component 5, the ABS as third resin component 17, and the acid-modified ABS as the dispersion material 16 were contained in the laser-absorbing resin member 23 and which was made under the first laser irradiation conditions was used as Inventive Example 2. An experimental example using the sample 21 in which the PBT as the first resin component 5, the ABS as third resin component 17, and the acid-modified ABS as the dispersion material 16 were contained in the laser-absorbing resin member 23 and which was made under the first laser irradiation conditions was used as Inventive Example 4. Inventive Examples 2 and 4 correspond to the joining structure 11 of the second embodiment.

Meanwhile, experimental examples using the samples 21 in which the same resin components as in Inventive Example 1, Inventive Example 2, Inventive Example 3, and Inventive Example 4 were contained in the laser-absorbing resin members 23 and which were made under the second laser irradiation conditions, in other words, with the laser output lower than those of Inventive Examples 1 to 4, were used as Comparative Example 1, Comparative Example 2, Comparative Example 3, and Comparative Example 4, respectively. As examples that did not contain the second resin component 6, an experimental example using the sample 21 in which the PA as the first resin component 5 was contained in the laser-absorbing resin member 23 and which was made under the first laser irradiation conditions was used as Comparative Example 5, and an experimental example using the sample 21 in which the PBT as the first resin component 5 was contained in the laser-absorbing resin member 23 and which was made under the first laser irradiation conditions was used as Comparative Example 6.

Junction evaluation was performed on Inventive Examples 1 to 4 and Comparative Examples 1 to 6, and the abundance ratio of the acid-modified ABS in the joining portion 24 was measured for Inventive Examples 1 to 4 and Comparative Examples 1 to 4.

As the junction evaluation, an example that was hardly joined and directly peeled off was naturally determined to be "B" (Bad). An example that did not directly peel off but did peel off after being subjected to free fall at a height of 1 m was also determined to be "B" (Bad). Thus, only an example that did not peel off even after being subjected to free fall at a height of 1 m was determined to be "A" (Good). The measurement of the abundance ratio of the acid-modified ABS in the joining portion 24 was performed using nano-IR that was an infrared spectroscopic analyzer having a nano-scale resolution.

First, it was confirmed from the table that the laser-transmitting resin member 22 and the laser-absorbing resin member 23 were not joined in Comparative Examples 5 and 6 in which the PA that did not contain the second resin component 6, in other words, was not compatible with the PMMA, was merely combined with the PBT and the PMMA.

In Comparative Examples 1 and 3 using the samples 21 made under the second laser irradiation conditions, in spite of containing the acid-modified ABS that was the second resin component 6, it was confirmed that the abundance ratio of the acid-modified ABS in the joining portion 24 was 20 wt%. For this reason, in Comparative Examples 1 and 3 using the samples 21 made with relatively low laser output, it was confirmed that the abundance ratio of the acid-modified ABS in the joining portion 24 and the abundance ratio of the acid-modified ABS in the bulk were identical to each other, and that the laser-absorbing resin member 23 was joined with the laser-transmitting resin member 22 in situ. That is, in Comparative Examples 1 and 3, the seepage of the acid-modified ABS did not occur, and the laser-transmitting resin member 22 and the laser-absorbing resin member 23 were only joined by the acid-modified ABS that was present in the junction interface. For this reason, Comparative Examples 1 and 3 directly peeled off, but easily peeled off when subjected to free fall at a height of 1 m.

Further, in Comparative Examples 2 and 4 using the samples 21 made under the second laser irradiation conditions, in spite of containing the ABS compatible with the PMMA in addition to the acid-modified ABS, it was confirmed that the abundance ratio of the acid-modified ABS in the joining portion 24 was 20 wt%. For this reason, Comparative Examples 2 and 4 directly peeled off, but easily peeled off when subjected to free fall at a height of 1 m.

In contrast, in all of Inventive Examples 1 and 3 using the samples 21 that contained the acid-modified ABS that was the second resin component 6 and were made under the first laser irradiation conditions, and Inventive Examples 2 and 4 using the samples 21 that contained the ABS compatible with the PMMA in addition to the acid-modified ABS and were made under the first laser irradiation conditions, it was confirmed that the abundance ratio of the acid-modified ABS in the joining portion 24 was 30 wt% to 40 wt%. For this reason, in Inventive Examples 1 to 4 having the samples 21 made with relatively low laser output, it was confirmed that the acid-modified ABS that easily moves in a melted state seeped out to the junction interface of the laser-absorbing resin member 23, and positively contributed to the junction with the laser-transmitting resin member 22. For this reason, none of Inventive Examples 1 to 4 peeled off even after being subjected to the free fall at a height of 1 m.

As described above, according to the joining structures 1 and 11 of the present invention, it is confirmed that, even when the components that are not compatible with the laser-transmitting resin members 2 and 12 are contained in the laser-absorbing resin members 3 and 13, the laser-transmitting resin members 2 and 12 and the laser-absorbing resin members 3 and 13 can be firmly joined.

In each of the above embodiments, the acid-modified ABS is given as the second resin component 6 and the dispersion material 16 by way of example, but without being limited thereto, the second resin component 6 and the dispersion material 16 may be different resin components.

In this way, the aforementioned embodiments are merely simple examples in every respect, and should not be restrictively interpreted. This application claims priority on Japanese Patent Application No. 2015-230442.

### [Industrial Applicability]

According to the present invention, even when the component that is not compatible with the laser-transmitting resin member is contained in the laser-absorbing resin member, the laser-transmitting resin member and the laser-absorbing resin member can be firmly joined. Thus, it is very useful in application to the joining structure made up of the laser-transmitting resin member and the laser-absorbing resin member.

### [Reference Signs List]

1, 11 Joining structure
2, 12 Laser-transmitting resin member
3, 13 Laser-absorbing resin member
4, 14 Joining portion
5, 15 First resin component
6 Second resin component
16 Dispersion material
17 Third resin component

## Claims

1. A joining structure (11), comprising:
a laser-transmitting resin member (12) and a laser-absorbing resin member (13), wherein:
the laser-absorbing resin member (13) is a polymer alloy that has a sea-island structure in which a first resin component (15), which is not compatible with the laser-transmitting resin member (12), is used as a sea component and a third resin component (17), which is compatible with the laser-transmitting resin member (12), is used as an island component, and the polymer alloy comprises a dispersion material (16) that is compatible with the first resin component (15); and
an abundance ratio of the dispersion material (16) in a melted/solidified part that constitutes the joining portion (14) of the laser-transmitting resin member (12) and the laser-absorbing resin member (13) **characterized in that** said abundance ratio is higher than that of the dispersion material (16) in the laser-absorbing resin member (13).

2. The joining structure according to claim 1, wherein the abundance ratio of the dispersion material (16) in the laser-absorbing resin member (13) is more than or equal to 5 wt%.

## Patentansprüche

1. Verbindungsstruktur (11), umfassend:
ein laserübertragendes Harzelement (12) und ein laserabsorbierendes Harzelement (13), wobei:
das laserabsorbierende Harzelement (13) eine Polymerlegierung ist, die eine Meer-Insel-Struktur aufweist, in der eine erste Harzkomponente (15), die nicht mit dem laserübertragenden Harzelement (12) kompatibel ist, als eine Meer-Komponente verwendet wird und eine dritte Harzkomponente (17), die mit dem laserübertragenden Harzelement (12) kompatibel ist, als eine Inselkomponente verwendet wird, und die Polymerlegierung ein Dispersionsmaterial (16) umfasst, das mit der ersten Harzkomponente (15) kompatibel ist; und
ein Häufigkeitsverhältnis des Dispersionsmaterials (16) in einem geschmolzenen/verfestigten Teil, der den Verbindungsabschnitt (14) des laserübertragenden Harzelements (12) und des laserabsorbierenden Harzelements (13) bildet, **dadurch gekennzeichnet, dass** das Häufigkeitsverhältnis höher ist als das des Dispersionsmaterials (16) in dem laserabsorbierenden Harzelement (13).

2. Verbindungsstruktur gemäß Anspruch 1, wobei das Häufigkeitsverhältnis des Dispersionsmaterials (16) in dem laserabsorbierenden Harzelement (13) mehr als oder gleich 5 Gew.-% beträgt.

## Revendications

1. Structure d'assemblage (11), comprenant :
un élément de résine de transmission laser (12) et un élément de résine d'absorption laser (13), dans laquelle :
l'élément de résine d'absorption laser (13) est un alliage polymère ayant une structure mer-île dans laquelle un premier composant de résine (15), qui n'est pas compatible avec l'élément de résine de transmission laser (12), est utilisé en tant que composant mer et un troisième composant de résine (17), qui est compatible avec l'élément de résine de transmission laser (12), est utilisé en tant que composant île, et l'alliage polymère comprend un matériau de dispersion (16) qui est compatible avec le premier composant de résine (15) ; et
un rapport d'abondance du matériau de dispersion (16) dans une partie fondue/solidifiée qui constitue la partie d'assemblage (14) de l'élément de résine de transmission laser (12) et de l'élément de résine d'absorption laser (13), **caractérisée en ce que** ledit rapport d'abondance est supérieur à celui du matériau de dispersion (16) dans l'élément de résine d'absorption laser (13).

2. Structure d'assemblage selon la revendication 1, dans laquelle le rapport d'abondance du matériau de dispersion (16) dans l'élément de résine d'absorption laser (13) est supérieur ou égal à 5 % en poids.
